# EUROPEAN PATENT APPLICATION

(11) **EP 4 549 342 A1**
(43) Date of publication of application: **07.05.2025**
(21) Application number: 24210084.0
(22) Date of filing: 31.10.2024
(51) Int. Cl.: B65G 1/02

(54) **WAREHOUSE IMPROVED BEAM**

(30) Priority: 06.11.2023 IT 202300023280
(71) Applicant: Rosss S.p.A., 50038 Scarperia E San Piero (FI) (IT)
(72) Inventor: BETTINI, Mr. Sandro, I-50038 SCARPERIA E SAN PIERO (Firenze) (IT)
(74) Representative: Lunati & Mazzoni S.r.L.

(57) **Abstract**

A warehouse (1) is provided, comprising uprights (3) and beams (4), wherein each beam (4) comprises a profile (41) defining a longitudinal axis (4a) and two ends (41a), and plates (42) constrained to said profile (41). The profile (41) has deformed end portions against which the distal wall (41c) is pressed and brought into contact with the proximal wall (41b), and a hole (41d) at the deformed end portions. Each of said plates (42) comprises a plate portion (42a). Said upright (3) further comprises a constraint (43) configured to juxtapose and mutually clamp together the walls (41b, 41c) and the plate portion (42a), thereby binding the profile (41) to the plate (42).

## Description

The present invention concerns a warehouse of the type specified in the preamble of the first claim.

As known, warehouses are logistical structures capable of receiving goods, storing them, and making them available for sorting, production, and/or shipping.

They consist of modules, usually called fronts, which are separate and mutually spaced to define access aisles to the modules.

Each module has a basic structure and shelves for supporting items loosely or in packages.

The basic structure consists of a series of profiles, some of which are vertical, defining the load-bearing columns (referred to as uprights) of said basic structure and are usually anchored to the ground; and other profiles, referred to as beams, which are horizontally arranged and connect two or more uprights, thereby forming quadrilaterals together with said uprights. Additionally, some basic structures may include additional profiles arranged obliquely and specifically along one or more diagonals of said quadrilaterals.

The shelves are configured to rest on a pair of cross members, defining a support surface for said items. Specifically, they have protruding teeth on the opposite side of the support surface so that they can be inserted into special grooves made in said beams.

The beams are usually made from a profile consisting of a metal sheet, typically with a thickness of 0.5-0.3 mm, folded on itself to define the aforementioned groove; and two polymer inserts, constrained by interlocking with the profile at its ends and including dowels for engaging with the columns.

The described known technique has some significant drawbacks.

Specifically, the shelves of a warehouse may not be able to support particularly heavy weights. This drawback is concentrated in the beams, which, being made from a metal sheet, are relatively not so strong and may deform due to the weight of the items placed on the shelves.

It is also noted that this aspect is exacerbated by the presence of the dowels, which constitute points of relatively low strength and thus relatively easy to break. Additionally, the warehouse, being assembled on-site, imposes a laborious handling process for transporting the pieces that make up said warehouse.

A further not insignificant drawback is the fact that the interlocking of the inserts into the profile is performed manually, resulting in risks to the operator's safety and construction additional time and cost burdens.

In this situation, the technical task underlying the present invention is to design a warehouse capable of substantially overcoming at least part of the cited drawbacks. Within this technical task, an important objective of the invention is to provide a warehouse that is easy to make and therefore has reduced costs.

Another important objective of the invention is to create a warehouse capable of supporting heavy loads.

The technical task and the specified objects are achieved by a warehouse as claimed in the attached claim 1. Examples of preferred embodiments are described in the dependent claims.

The features and advantages of the invention are clarified below through the detailed description of preferred embodiments of the invention, with reference to the accompanying drawings, wherein:
**Fig. 1** shows a warehouse according to the invention;
**Fig. 2** illustrates, to scale, a detail of a warehouse according to the invention;
**Figs. 3a-3b** are two views of an assembly of a warehouse according to the invention;
**Figs. 4a-4b** display two views of a detail of the assembly in Figs. 3a and 3b;
**Figs. 5a-5b** illustrate two views of the detail of the assembly in Figs. 4a and 4b in a different position;
**Figs. 6a-6e** show the assembly steps of the assembly in Fig. 3;
**Fig. 7** introduces a detail associable with a warehouse according to the invention;
**Fig. 8** represents a possible use of the detail in Fig. 7; and
**Fig. 9** schematizes a setup process for a warehouse according to the invention.

In this document, measurements, values, shapes, and geometric references (such as perpendicularity and parallelism), when associated with words like "approximately" or other similar terms such as " virtually" or "substantially", should be understood as subject to measurement errors or inaccuracies due to manufacturing and/or production errors and, most importantly, subject to a slight deviation from the value, measurement, shape, or geometric reference to which they are associated. For example, such terms, when associated with a value, preferably indicate a deviation of no more than 10% from the value itself. Moreover, when terms such as "first", "second", "upper", "lower", "primary", and "secondary" are used, they do not necessarily identify an order, priority of relation, or relative position but can simply be used to distinguish different components more clearly one from the other.

Unless otherwise indicated, "perpendicular," "transverse," "parallel," or "normal" or other geometric positioning terms between geometric elements (for example, axes, directions, and lines) should be understood with reference to their mutual geometric position between the corresponding projections. These projections are defined on a single plane parallel to the plane(s) of said geometric elements' position.

Measurements and data reported in this text should be considered, unless otherwise indicated, as being performed in the International Standard Atmosphere (ICAO) (ISO 2533:1975).

Unless otherwise specified, as indicated in the following description, it is understood that terms such as "treatment", "computing", "determination", "calculation", or similar are considered to refer to the action and/or processes of a computer or similar electronic computation device that manipulates and/or transforms data represented as physical quantities, such as electronic magnitudes of records of a computing system and/or memories into other data similarly represented as physical quantities within computer systems, records, or other storage, transmission, or information display devices.

With reference to the Figures, the warehouse according to the invention is globally denoted by number 1.

It is configured to define one or more support surfaces which, in turn, are configured to support and then store items loosely or put together, for example, in packages.

The warehouse 1 comprises one or more storage modules, each of which defines at least one support surface and in particular a plurality of support surfaces, preferably mutually overlapping and parallel.

Each module can be anchored to the ground. Alternatively, it can be mobile, thus defining a self-compacting warehouse 1.

Each module and therefore the warehouse 1 comprises at least one shelf **2** defining said support surface; one or more uprights **3;** and one or more beams **4** constrained to the uprights, defining the supporting structure of warehouse 1; and optionally one or more diagonals **5,** preferably subtended between the points of constraint between uprights 3 and beams 4.

Each shelf 2 may include a plate **21** defining the support surface; and engagement means **22** to a beam 4.

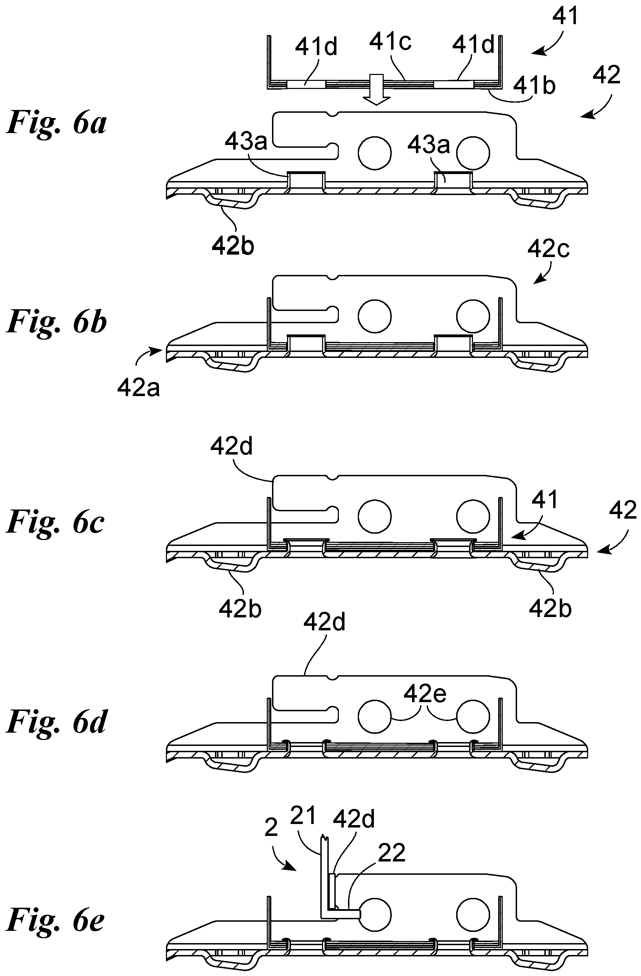

The support surface may be substantially perpendicular to the gravitational gradient. The engagement means 22 are configured to rest on a dedicated support of the beam 4. For example, as illustrated in Fig. 6e, they may include a folded edge, precisely designed to fit into a dedicated channel made in the beam 4, as described in detail below.

Each beam 4 defines a longitudinal axis **4a** appropriately parallel to the support surface.

The longitudinal axis 4a may be located at the centre of gravity.

The beam 4 may include a profile **41** and one or more plates **42** configured to be constrained to the profile 41, appropriately at an end of the profile itself. Specifically, it includes a pair of plates 42 arranged at opposite ends of the profile 41.

The profile 41 defines a proximal wall **41b** relative to the plates 42, and a distal wall 41c defining at least one support of the shelf 2 and preferably an additional support of the shelf 2.

The distal wall 41c is opposite to the proximal wall 41b with respect to the same profile 41. Thus, the support and, if any, the additional support are superimposed on the proximal wall 41b appropriately along a normal to the same wall 41b.

The support may include a channel to support the shelf and is specifically configured to accommodate the engagement means 22.

Preferably, the support is absent at the ends 41a and extends along the longitudinal axis 4a for a limited extension of the profile 41.

The additional support may include a channel, appropriately parallel to the support, in order to support the shelf and specifically configured to accommodate the engagement means 22.

Preferably, the additional support is absent at the ends 41a and thus extends along the axis 4a for a limited extension of the profile 41.

The profile 41 may be made by folding a sheet.

In particular, the sheet may be folded so that the proximal wall 41b is obtained by folding and then overlapping three times the said sheet, thus overlapping three layers of the sheet; and that the distal wall 41c appropriately consists of a single layer of the sheet. It should be noted that along the normal to the walls 41b and 41c, there are four layers of the sheet.

Optionally, the sheet is folded in such a way as to define, at the edges of the proximal wall 41b parallel to the longitudinal axis 4a, at least one (specifically two) side wall enclosing/constraining the distal wall 41c and specifically the support and, if any, the additional support. The at least one side wall extends perpendicularly to the proximal wall on the side opposite to the upright 3.

Advantageously, the profile 41 includes, at each end 41a, a deformed end portion wherein the distal wall 41c is pressed against the proximal wall 41b and specifically brought into contact with said proximal wall 41b. Preferably, at the end portion, there are multiple layers (specifically four) of the sheet in mutual contact.

The end portion identifies the minimum section of the profile.

The end portion has a length practically less than 10%, and specifically less than 5%, and more precisely less than 2.5% of the length of the profile 41.

In this document, the term "length" identifies a dimension calculated along the longitudinal axis 4a.

The central portion of the profile 41 is not deformed.

The central portion identifies the maximum section of the profile.

The profile 41 may provide between the deformed portions and the central portion an intermediate portion connecting these portions.

The intermediate portion identifies a section of the profile with a variable section, appropriately in a monotonous way, from said maximum section to said minimum section.

Each intermediate portion has a length substantially less than 20%, and specifically less than 10%, of the length of the profile 41.

Preferably, the at least one side wall is not deformed at each portion.

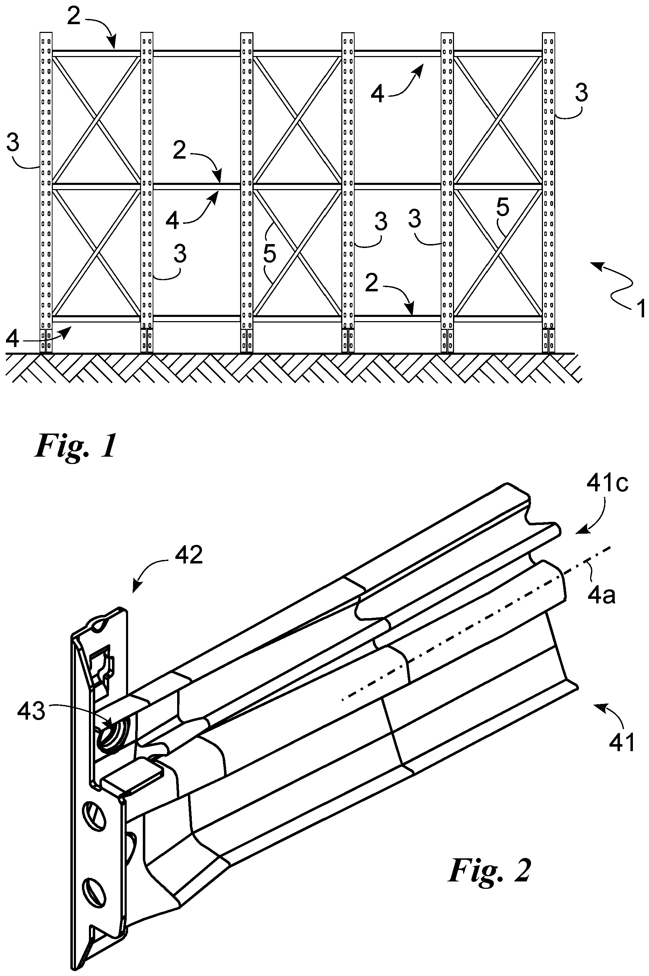

In Fig. 2, an end portion and part of the adjacent intermediate portion are shown.

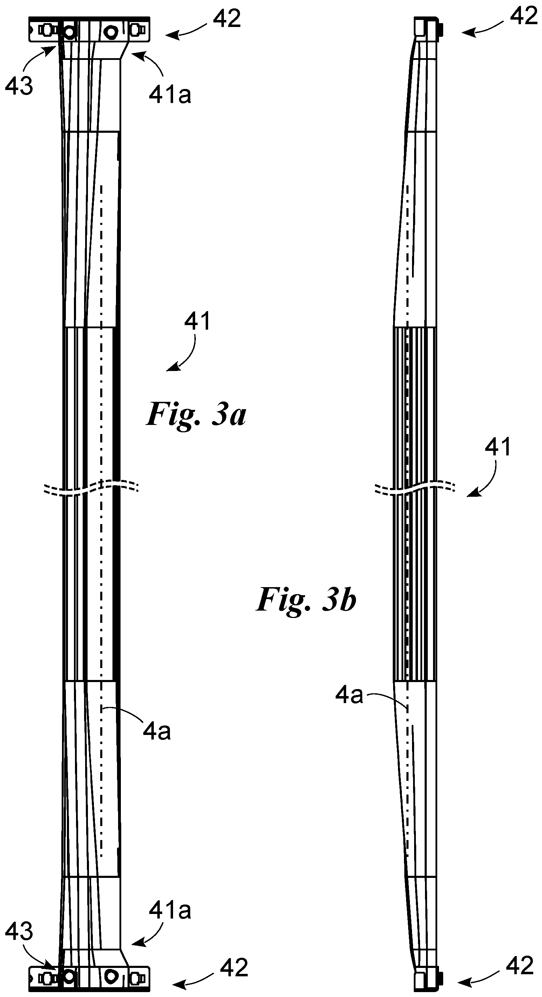

The proximal wall 41b may be flat. Optionally, as shown in Fig. 3b, the proximal wall 41b at the end portions, and optionally also at the intermediate portion, may be sloped with respect to the central portion of the same wall 41b at an appropriately small tilt angle, specifically less than 5°, and precisely less than 3°. Specifically, the tilt angles of the end portions are opposite to each other and appropriately of the same angular width.

The profile 41 further includes, at each end portion, at least one engagement hole **41d** to one of the plates. Preferably, they include multiple holes 41d (specifically two holes 41d), appropriately practically aligned along the normal to the support surface. The hole 41d is a through hole and thus passes through the proximal wall 41b and distal wall 41c and thus through all the layers of the folded sheet.

Each hole 41d has an axis perpendicular to the longitudinal axis 4a and specifically to the proximal wall 41b.

The sheet may be a metal sheet and, for example, made of steel.

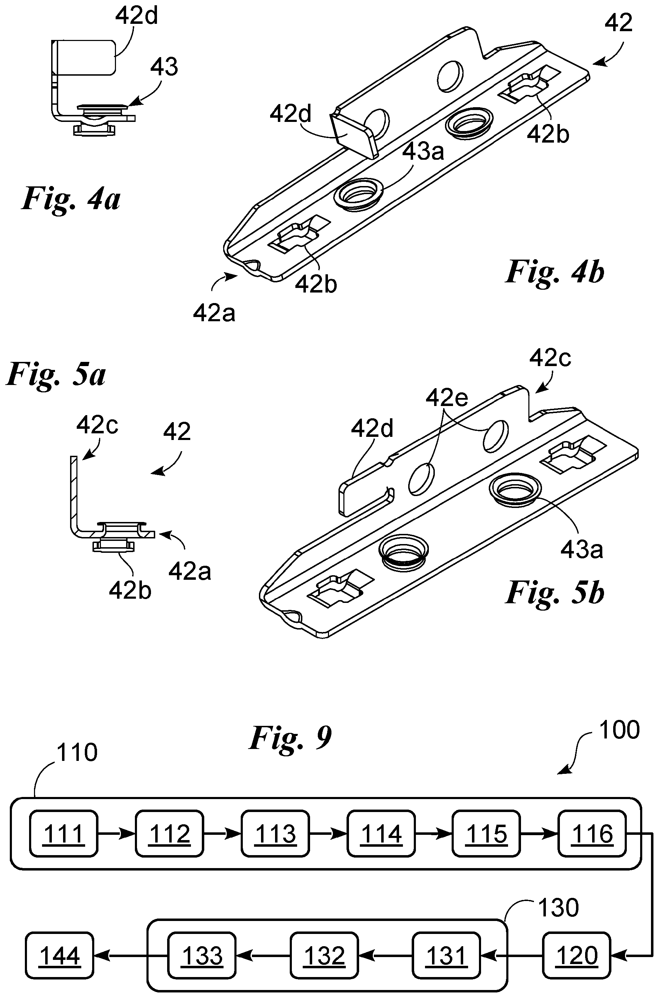

Each plate 42, as shown, for example, in Figs. 4a-5b, includes a plate portion 42a configured to be integrally constrained to the profile 41.

The plate portion 42a may be substantially flat.

The plate portion 42a is in contact with the proximal wall 41b when the plate 42 is secured to the profile 41.

The beam 4 can be integrally and appropriately detachably constrained to the upright 3 at least at one plate 42 (specifically at both plates 42). For this purpose, the beam 4 can include at least one constraint 43 for each plate 42 to the profile 41. The constraint **43** is configured to integrally and appropriately detachably bind together the profile 41 and plate 42.

Specifically, it is configured to juxtapose and bring into mutual contact and then clamp together the proximal wall 41b, the distal wall 41c, and the plate portion 42a, binding the profile 41 to the plate 42.

Each constraint 43 may include an axial body 43a engaging with the profile 41 at a hole 41d. Appropriately, a constraint 43 may include an axial body 43a for each hole 41d.

The axial body 43a may be configured to be integrally fixed to the plate and to protrude from the plate portion 42a, defining an edge distal from the same plate portion 42a.

The axial body 43a is preferably hollow, for example, a hollow cylinder.

Each axial body 43a is inserted into a hole 41d, allowing the plate portion 42a to be in contact with the proximal wall 41b; and the edge distal of the axial body 43a is folded against the profile 41 from the opposite side of the plate portion 42a, clamping the proximal wall 41b and the distal wall 41c (i.e., the layers of the folded sheet) together, while simultaneously binding the profile 41 to the plate 42.

In a preferred non-limiting example, each axial body 43a and thus the constraint 43 may be made in one piece with the plate portion 42a, for example, by folding the plate portion 42a.

Alternatively, they may be physically separate from the plate 42 and attachable to it by known means such as threading, welding, or interlocking. For example, it may define an opposite edge to said edge distal, constrained to the plate portion 42a, for example, by a folding of said opposite edge similar to that of the edge distal.

Each plate 42, specifically the plate portion 42a, is configured to rest and specifically to be constrained to an upright 3 integrally and preferably detachably, thus binding the beam 4 to the upright 3.

For this purpose, the plate 42 includes at least one hook **42b** connecting the plate 42 to the upright 3.

In detail, it includes multiple hooks 42b, specifically two hooks 42b, protruding from the plate portion 42a on the opposite side of the profile 41 relative to the plate 42 (it is noted that in this document, any mutual positioning between the profile 41, constraint 43, and plate 42 should be understood when profile 41 and plate 42 are connected to each other); and the upright 3 may include at least one seat for said protruding element and thus the hook 42b.

Preferably, the constraint 43 and thus at least one axial body 43a is positioned between the two hooks 42b.

Each plate 42 may include an additional plate **42c** protruding from the plate portion 42a on the opposite side of the upright 3.

The additional plate 42c may be transverse and specifically normal to the longitudinal axis 4a and thus to the plate portion 42a.

It partially overlaps with at least part of the section of the profile 41 along the longitudinal axis 4a.

The additional plate 42c may be substantially flat.

Each plate 42 may include a dowel **42d** supporting the shelf 2, appropriately protruding from the additional plate 42c.

The dowel 42d substantially defines an extension along the longitudinal axis 4a of the support and/or the additional support. Preferably, it defines an extension, appropriately at said end portion, along the longitudinal axis 4a of a support and/or the additional support.

The dowel 42d has a preferred axis of extension practically parallel to the longitudinal axis 4a.

It has a length practically less than 10%, and specifically less than 5%, and more precisely less than 2.5% of the length of the profile 41.

The dowel 42d has a length not greater than that of the end portion.

It is integrally connected to the additional plate 42c. The junction section between the dowel 42d and the additional plate 42c has notches designed to facilitate the folding of the dowel 42d relative to the additional plate 42c as described below. The dowel 42d is spaced from the plate portion 42a to allow the engagement means 22 to be positioned between the dowel 42d and the plate portion 42a.

Each plate 42 may include gripping means **42e** for the beam 4.

The gripping means 42e are integral with the additional plate 42c.

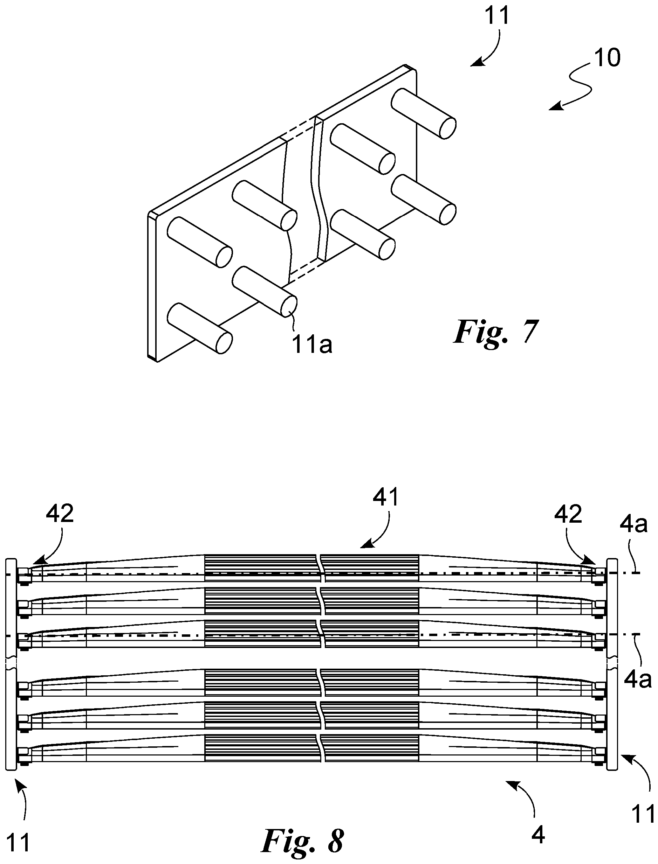

They are configured to allow the handling of at least one beam 4 appropriately before it is constrained to the upright 3. Specifically, they are configured to allow the handling of multiple beams 4 arranged having their longitudinal axis 4a substantially parallel to each other (Fig. 8).

The gripping means 42e may include at least one seat for a retaining pin 11 of the beam 4 appropriately formed on said additional plate 42c. Preferably, each of the gripping means 42e includes at least one seat, and specifically two seats, appropriately formed on said additional plate 42c.

Each seat can be identified as a through-hole with an axis parallel to the longitudinal axis 4a.

The invention therefore introduces a handling device 10 for a warehouse, specifically for one or more beams 4.

The device 10 may include at least one handler, not shown in the figure for simplicity, and at least one retaining block 11.

The handler is any known means for moving goods, such as, for example, a forklift. Each retaining block 11, shown in Fig. 7, is configured to be integrally secured to at least one beam 4 and specifically to multiple beams, their longitudinal axis 4a being substantially parallel, lying on the same plane and preferably not in mutual contact. The retaining block 11 includes a base defining the load-bearing body of the block 11 and at least one constraint **11a** for each of the gripping means 42e.

The constraint 11a may include a pin configured to be inserted into said seat and protruding from said base.

The pin defines a prevailing extension axis substantially parallel to the longitudinal axis 4a when the retaining block 11 is integrally constrained to the beam 4.

The pin may have a cross-section substantially equal to the seat. Alternatively or additionally, it may have a tapered cross-section (for example, conical) with the maximum section proximal to the base and, preferably, at least equal to and specifically greater than the seat cross-section.

The base, and thus the retaining block 11, has a width, calculated along a sagittal axis perpendicular to the lying plane of the beams 4, at least equal to and specifically greater than the width of the beams 4, allowing the beams 4 to be stacked along said sagittal axis by bringing the retaining blocks 11 and specifically the bases into mutual contact.

The device 10 may include two retaining blocks 11 for each handler, configured to be constrained to both plates 42 of each beam 4, which is then enclosed between said retaining blocks 11.

It should finally be noted that the plate 42 may be made in one piece, appropriately by folding an additional sheet, which can be made of metal material.

The assembly of the warehouse 1, as previously described in structural terms, defines a new setup process **100** for a warehouse.

The setup process 100 includes an implementation process **110** of at least one or more beams 4.

The implementation process 110 includes at least a bending step **111** of a sheet, appropriately made of metal material.

In the bending step 111, the sheet is folded to form the profile 41. Specifically, in the bending step 111, the sheet is folded to define the proximal wall 41b, preferably obtained by overlapping multiple layers, in detail, three layers of sheet, the distal wall 41c, appropriately including the support and, if any, the additional support, and any one or more side walls.

The implementation process 110 includes a deformation step **112** of the profile 41 at the ends 41a.

In the deformation step 112, the profile 41 is compressed, thus pressing the distal wall 41c, and therefore the support and, if any, the additional support, against the proximal wall 41b, thereby defining a deformed end portion wherein the distal wall 41c is in contact with the proximal wall 41b, as shown in Fig. 6a, and thus the various layers of the sheet are in mutual contact.

It should be noted that this deformation of the end portions also results in the contact of a section of the adjacent distal wall 41c adjacent to the end portion. Consequently, an intermediate portion connecting the deformed portion and the central portion is formed.

Preferably, in the deformation step 112, the at least one side wall is not deformed. Thus, the compressive force on the distal wall 41c against the proximal wall 41b is applied only to said distal wall 41c.

The implementation process 110 includes a tilting step 113 of at least part of the proximal wall 41b.

In this tilting step 113, the proximal wall 41b, located at each end portion and preferably at the intermediate portion, is tilted at the aforementioned tilt angle with respect to the same proximal wall 41b located at the central portion.

Preferably, the deformation step 112 and the tilting step 113 are performed simultaneously.

The implementation process 110 includes a drilling step **114** in which at least one or more holes 41d are made in the deformed end portion, specifically two holes 41d, thereby completing the profile 41.

The implementation process 110 includes a shaping step **115** of the plates 42, during which a constraint 43 is formed on the plate portion 42a, as well as at least one axial body 43a protruding from it and defining an edge distal from the same plate portion 42a.

In detail, in the shaping step 115, an additional sheet is folded to create the plate portion 42a, at least one axial body 43a (preferably two) protruding from the plate portion 42a along an axis, and one or more hooks 42b. During this step, the additional sheet may also be folded to form the additional plate 42c and, preferably, the dowel 42d and/or the gripping means 42e.

It should be noted that at the end of the shaping step 115, and thus at the end of the implementation process 110, the axial body 43a is not folded and is therefore practically straight, extending along an axis appropriately parallel to the longitudinal axis 4a.

Furthermore, at the end of the shaping step 115, the additional plate 42c and the dowel 42d are substantially coplanar (Figs. 5a and 5b).

The implementation process 110 may include a constraint step **116** wherein the beam 4 is completed by binding a profile 41 to at least one plate 42, specifically to two plates 42.

In the constraint step 116, the proximal wall 41b is brought close to the plate portion 42a, and the constraint 43 then juxtaposes and clamps the proximal wall 41b, the distal wall 41c, and the plate portion 42a together, thereby mutually binding the walls 41b and 41c and the plate portion 42a and binding the profile 41 to the plate 42.

In detail, the constraint step 116 involves an insertion step (Figs. 6a-6b) wherein each of the one or more axial bodies 43a is inserted into a hole 41d, simultaneously bringing the plate portion 42a close to the proximal wall 41b; and then a folding step (Fig. 6c-6d) wherein the edge distal of the axial body 43a is folded against the profile 41, clamping the proximal and distal walls 41b and 41c together and binding the profile 41 and plate 42.

During the folding step, the edge distal is flared outward from the axial body 43a and then folded on itself, appropriately always outward, so as to come into contact with the profile 41.

Preferably, the constraint step 116 includes, between the insertion step and the folding step, a flaring step (Figs. 6b-6c) wherein the cross-section of the axial body 43a is enlarged at least at the edge distal (for example, made conical), bringing the axial body 43a into contact with the hole 41d, thereby preventing unwanted movements between the profile 41 and the plate 42 in the subsequent folding step. The setup process 100 includes a supplementary implementation process **120** wherein one or more uprights 3, specifically one or more shelves 2, and preferably one or more diagonals 5, are made.

The setup process 100 includes a transport process **130** for the warehouse components.

The transport process 130 may include at least one constraint step **131** wherein an assembly of beams 4 is formed by mutually constraining two or more beams 4 using at least one retaining block 11, specifically two blocks 11.

In this constraint step 131, two or more beams 4 are mutually aligned by arranging their longitudinal axes 4a in parallel; and then each retaining block 11 is anchored to a plate 42 by engaging the retaining blocks 11 with the gripping means 42e and specifically inserting said pins into said seats.

Appropriately, the transport process 130 may include multiple constraint steps 131 and at least one stacking step **132** wherein, for example, using a handler, two or more assemblies of beams 4 are stacked by bringing the retaining blocks 11, and specifically the bases of said blocks 11, into contact.

The transport process 130 then includes a placement step **133** wherein, for example, using a handler, one or more assemblies of beams 4 are positioned at the warehouse setup site; one or more shelves 2, one or more uprights 3, and preferably one or more diagonals 5.

The setup process 100 includes an assembly process **140** of the warehouse 1.

In this assembly process 140, one or more uprights 3 are constrained to one or more beams 4 at each plate 42. In detail, the operator, using the hooks 42b, constrains the beams 4 to the uprights 3 and the shelves 2 to the beams by engaging the engagement means 22 with the supports or alternatively with the additional support. The assembly process can be ended by constraining the diagonals 5 to the uprights 3.

The warehouse 1 according to the invention achieves important advantages.

In fact, unlike known warehouses, the beams 4, thanks to the innovative constraint between the plate 42 and the profile 41, have increased strength, thus allowing the warehouse to have both greater durability and increased load capacity.

Another specific advantage lies in the fact that the constraint between the plate 42 and the profile 41 and between the uprights 3 and the beams 4 is particularly simple, making the setup of the warehouse 1 equally simple.

This constructional simplicity is also ensured by the innovative handling device 10, which allows the beams 4 to be moved in a simple and extremely safe manner for the operator.

The invention is susceptible to variations within the scope of the inventive concept defined by the claims. Within this scope, all details are replaceable with equivalent elements, and the materials, shapes, and dimensions can be of any kind.

## Claims

1. Warehouse (1) comprising:
- at least one upright (3),
- at least one beam (4) comprising:
∘ a profile (41) defining:
▪ a longitudinal axis (4a) and two ends (41a),
▪ a proximal wall (41b), and
▪ a distal wall (41c) opposite said proximal wall (41b) with respect to said profile (41);
∘ at least one plate (42) secured to said upright (3) and resting on said proximal wall (41b) and constrained to one of said ends (41a) of said profile (41);
**characterized in that**
- said profile (41) comprises, at each of said ends (41a), a deformed end portion wherein said distal wall (41c) is pressed against said proximal wall (41b) and brought into contact with said proximal wall (41b);
- each of said plates (42) comprises a plate portion (42a) in contact with said proximal wall (41b); and
**in that** said beam (4) comprises
- at least one constraint (43) configured to juxtapose and mutually clamp together said proximal wall (41b), said distal wall (41c), and said plate portion (42a), by binding said profile (41) to said plate (42).

2. Warehouse (1) according to claim 1, wherein said profile (41) comprises, at each of said ends (41a), at least one hole (41d) made at said deformed end portions and passing through said proximal wall (41b) and said distal wall (41c); wherein said constraint (43) comprises, for each of said at least one hole (41d), an axial body (43a) protruding from said plate portion (42a), defining an edge distal from said plate portion (42a), and folded against said profile (41) from the opposite side to said plate portion (42a), thereby clamping said proximal wall (41b) and said distal wall (41c) together and binding said profile (41) to said plate (42).

3. Warehouse (1) according to at least one preceding claim, wherein said plate (42) comprises an additional plate (42c) and a dowel (42d) supporting said shelf (2) integrally constrained to said additional plate (42c), substantially defining an extension along said longitudinal axis (4a) of said support at said end portion.

4. Warehouse (1) according to the preceding claim, wherein said dowel (42d) has, along said longitudinal axis (4a), a length substantially less than 2.5% of the length of said profile (41).

5. Warehouse (1) according to at least one preceding claim, wherein said plate (42) is formed as one piece.

6. Warehouse (1) according to at least one preceding claim, comprising at least one shelf (2) defining a support surface, wherein said beams (4) are secured to said uprights (3), defining the supporting structure of said warehouse (1), and wherein said distal wall (41c) defines at least one support for said at least one shelf (2).

7. Warehouse (1) according to the preceding claim, wherein said plate (42) comprises two hooks (42b) connecting said plate portion (42a) to one of said uprights (3); and wherein said constraint (43) is positioned between said two hooks (42b).

8. Setup process (100) of a warehouse (1) comprising
- an implementation process (110) of at least one beam (4), said beam (4) comprising
∘ at least one profile (41) defining a longitudinal axis (4a) and two ends (41a), and
∘ two plates (42) constrained to said ends (41a) of said profile (41); ∘ said at least one profile (41) defining a proximal wall (41b) supporting said plates (42) and a distal wall (41c) opposite said proximal wall (41b) with respect to said profile (41);
- a supplementary implementation process (120) of at least one upright (3);
- an assembly process (140) of said warehouse (1), wherein said at least one beam (4) is constrained to said at least one upright (3) at said plate (42);
said implementation process (110) **being characterized by** comprising
- a deformation step (112) of said profile (41), wherein, at each of said ends (41a), said profile (41) is compressed by pressing said distal wall (41c) against said proximal wall (41b), thereby defining a deformed end portion in which said distal wall (41c) is in contact with said proximal wall (41b); and
- a constraint step (116) in which said proximal wall (41b), said distal wall (41c), and said plate portion (42a) are juxtaposed and mutually clamped together, thereby binding said profile (41) to said plate (42).

9. Setup process (100) according to claim 8, comprising
- a drilling step (114) in which at least one hole (41d) is made at each of said deformed end portions, passing through said distal wall (41c) and said proximal wall (41b);
- a shaping step (115) of said plates (42), in which at least one axial body (43a) is formed on a plate portion (42a) protruding from said plate portion (42a) and defining an edge distal from said plate portion (42a); and wherein said constraint step (116) comprises
- an insertion step, in which each of said at least one axial body (43a) is inserted into said at least one hole (41d), bringing said proximal wall (41b) into contact with said plate portion (42a), and a folding step in which said edge distal is folded against said profile (41) from the opposite side to said plate portion (42a), thereby clamping said proximal wall (41b) and said distal wall (41c) together and binding said profile (41) to said plate (42).

10. Setup process (100) according to claim 9, wherein said constraint step (116) comprises a flaring step in which the cross-section of said axial body (43a) is enlarged at least at said edge distal; and wherein said flaring step is interposed between said insertion step and said folding step.
